# EUROPÄISCHE PATENTSCHRIFT

(11) **EP 2 315 801 B1**
(45) Veröffentlichungstag und Bekanntmachung des Hinweises auf die Patenterteilung: **26.11.2014**
(21) Anmeldenummer: 09780402.5
(22) Anmeldetag: 10.07.2009
(51) Int. Cl.: C08K 5/00, C08L 33/04

(54) **EINFÄRBEPROZESS FÜR POLY(METH)ACRYLATE MIT FLÜSSIGFARBEN AUF WASSERBASIS UND FLÜSSIGFARBEN AUF WASSERBASIS**
COLORING PROCESS FOR POLY(METH)ACRYLATES WITH WATER-BASED LIQUID DYES, AND WATER-BASED LIQUID DYES
PROCÉDÉ DE COLORATION POUR POLY(MÉTH)ACRYLATES À L'AIDE DE COLORANTS LIQUIDES AQUEUX, ET COLORANTS LIQUIDES AQUEUX

(30) Priorität: 19.08.2008 DE 102008041338
(43) Veröffentlichungstag der Anmeldung: 04.05.2011
(73) Patentinhaber: Evonik Röhm GmbH, 64293 Darmstadt (DE)
(72) Erfinder: GOLCHERT, Ursula, 64807 Dieburg (DE); SCHULTES, Klaus, 65193 Wiesbaden (DE); NAU, Stefan, 64572 Buettelborn (DE); BECKER, Ernst, 64625 Bensheim (DE); KAISER, Manuel, 51373 Leverkusen (DE); GRÖNEN, Jürgen, 51491 Overath (DE); CLEFF, Daniel, 51643 Gummersbach (DE); ROSNER, Viola, 51399 Burscheid (DE); BENDZKO, Norbert, 51375 Leverkusen (DE)
(86) Internationale Anmeldenummer: PCT/EP2009/058784
(87) Internationale Veröffentlichungsnummer: WO 2010/020474

(56) Entgegenhaltungen:
- EP-A- 0 583 926
- US-A- 3 238 159
- US-A- 3 316 114
- US-A- 3 349 054
- US-A- 3 390 114
- US-A- 3 992 343
- US-B1- 6 649 122

## Beschreibung

### Gebiet der Erfindung

Die Erfindung betrifft ein Verfahren zur Einfärbung von thermoplastischen Kunststoffformmassen mit wässrigen Farbmittelpräparationen, als Kunststoffformmasse wird beispielsweise eine Polymethyl(meth)acrylat-Formmasse eingesetzt. Ferner betrifft die Erfindung eine Farbmittelpräparation auf Wasserbasis.

### Stand der Technik

US-PS 3,956,008 beschreibt eine flüssige Dispersion zur Einfärbung von Kunststoffgegenständen, bestehend aus anorganischen Partikeln zwischen 2 und 50 µm Größe und einem oberflächenaktiven System aus Sorbit-Estern. Wässrige Systeme werden nicht beschrieben.

US-PS 3,992,343 (Degussa) beschreibt ein wässriges Dispersionssystem, bestehend aus organischen oder anorganischen Pigmentpartikeln, Wasser und einem Dispersionsmittel, wobei das Dispersionsmittel sehr spezifisch ist.
US-PS 4,091,034 beschreibt eine blaue, wasserlösliche Farbstoffformulierung eines Triphenylmethanfarbstoffs. Als wässrige Dispersion wird er zur Färbung von Textilien eingesetzt.

US-PS 4,167,503 beschreibt eine flüssige Formulierung, basierend auf einem Träger aus einem PolyoxyethylenDerivat, PEG und einem weiteren Additiv. Wasser als Lösungsmittel wird nicht verwendet.

US-PS 4,169,203 beschreibt wasserlösliche, polymere Pigmente, die aus einem nicht chromophoren polymeren Gerüst und daraus chemisch gebundenen chromophoren Gruppen bestehen.

US-PS 4,341,565 beschreibt eine flüssige Farbstoffformulierung aus festem Pigment, eine flüssige Phase aus Estern aus langkettigen Alkoholen und langkettigen Säuren sowie einem Gelierhilfsmittel.

US-PS 4,871,416 beschreibt ebenfalls Rezepturen auf organischer Basis.

US-PS 4,634,471 beschreibt Rezepturen mit organischen Lösungsmitteln.

US-PS 4,804,719 beschreibt eine wasserdispergierbare Formulierung, enthaltend ein Polymer.

US-PS 4,910,236 beschreibt eine Druckfarbe, aufgebaut aus einer wässrigen Emulsion aus Wasser und Emulgator und einer organischen Phase aus olefinischen Harzen und Pigment. In einem Folgeschritt wird der Formulierung das Wasser entzogen.

US-PS 5,043,376 beschreibt ein nicht wässriges System.

US-PS 5,104,913 stellt eine Teilanmeldung zu US-PS'376 und beschreibt ein Verfahren zur Herstellung einer wässrigen Farbstoffdispersion, Öl in Wasser.

US-PS 5,308,395 beschreibt ebenfalls eine organische Lösung.

Ein hydrophiles Farbmittel und Wasser werden in US-PS 5,328,506 zu einem Teig geformt, der mit den üblichen Werkzeugen und Maschinen bei der Farbstoffherstellung weiter verarbeitet werden kann.

US-PS 5,759,472 beschreibt ein Verfahren zum Formen von Kunststoffen, bestehend aus folgenden Schritten: Herstellung einer Farbmischung aus einem Träger (10 - 75 %), Wasser (0 - 15 %), einem Dispergiermittel (0,1 - 10 %) und einem Farbmittel (10 - 80 %). Zusätzlich können noch Polyole enthalten sein. In einem weiteren Verfahrenschritt wird ein pulverförmiges Polymer bereitgestellt, anschließend das Trägersystem mit dem Polymerpulver gemischt und zu der Mischung verarbeitet (PE). Ein Unteranspruch ist auf die Menge von 1 - 14 % Wasser gerichtet.

US-PS 6,428,733 beschreibt ein flüchtiges System, es enthält eine Mischung aus Glycerin und Wasser.

US-PS 6,649,122 beschreibt ein Verfahren zur Einfärbung von thermoplastischen Kunststoffen, bei dem man 10 bis 80 Prozent Farbmitte und maximal 30 Prozent Dispergiermittel einsetzt, der Rest ist Wasser als Lösungsmittel. Als Dispergiermittel werden Polyvinylpyrrolidone, wie beispielsweise Sokolan^{®} HP50 (BASF) oder neutralisierte Polyacrylsäuren, Salze von Ligninsulfonsäuren, von Naphthalinsulfonsäuren oder vom polymeren Carbonsäuren eingesetzt. Vorzugsweise werden nicht-ionische Dispergiermittel eingesetzt, wie beispielsweise Nonylphenol oder Octylphenol.

Nachteilig bei den Lösungen des Standes der Technik ist die mehr oder weniger intensive Verwendung von organischen, Lösungsmitteln in der Farbmittelformulierung. Die Verwendung von organischen Lösungsmitteln in Kunststoffformmassen führt zu einem Anstieg der Konzentration von niedermolekularen organischen Verbindungen im Polymer und dadurch zu einer Verschlechterung der eigenschaften der Polymere, wie beispielsweise Absenkung der Vicat-Erweichungstemperatur oder zu einer höheren Spannungsrißempfindlichkeit der aus den Polymeren hergestellten Gegenstande.

Die auf dem Markt erhältlichen Flüssigfarben enthalten in der Regel Fettsäureester oder Weißöle als Bindemittel, die nach der Einfärbung im Polymerisat verbleiben und zu einer Absenkung der Vicat-Erweichungstemperatur führen. Ferner lassen sich Belagbildungen beim Spritzguß beobachten.

### Aufgabe

Aufgabe der vorliegenden Erfindung ist es daher, eine wässrige Farbmittelpräparation und ein Verfahren zur Einfärbung von thermoplastischen Kunststoffformmassen zur Verfügung zu stellen, die die oben skizzierten Nachteile des Standes der Technik nicht aufweist und die sich als problemloser Ersatz für die Einfärbung von thermoplastischen Kunststoffformmassen einsetzen lässt.

Als thermoplastische Kunststoffformmasse wird beispielsweise eine Polymethyl(meth)acrylat-Formmasse oder eine Polycarbonat-Formmasse eingesetzt.

Unter Polymethyl(meth)acrylat-Formmassen werden im Folgenden Kunststoffformmassen aus polymerisiertem Alkylmethacrylat und aus polymerisiertem Alkylacrylat sowie aus Mischungen der beiden Monomertypen verstanden.

### Lösung

Gelöst wird die Aufgabe durch eine wässrige Farbmittelpräparation unter Verwendung eines Polyacrylat-Emulgators gemäß Anspruch 1. Die eingefärbte thermoplastische Kunststoffformmasse und aus ihr herstellbare Kunststoffformkörper wird in den nachfolgenden Ansprüchen geschützt.

Die Erfindung betrifft eine wässrige Farbmittelpräparation zur Einfärbung von thermoplastischen Kunststoffformmassen, dadurch gekennzeichnet, daß sie
- 1 Gew-% bis 49 Gew.-% eines modifizierten Polyacrylats,
- 0,5 Gew-% bis 50 Gew.-% einer Pigmentmischung und
- 0 Gew-% bis 50 Gew.-% der üblichen Hilfsstoffe und
- VE-Wasser enthält, wobei sich die Gewichtsteile der Komponenten zu 100 Gew.-% ergänzen.

Durch die Verwendung der erfindungsgemäßen wässrigen Farbmittelpräparation gelingt es in überraschender und nicht zu erwartender Weise, neben einer guten Einfärbung der thermoplastischen Kunststoffformmasse auch eine Konstanthaltung oder sogar Erhöhung der Vicat-Erweichungstemperatur des aus der eingefärbten thermoplastischen Kunststoffformasse hergestellten Kunststoffformkörpers zu erzielen. Die übrigen mechanischen Eigenschaften der Kunststoffformkörper bleiben unverändert.

### Durchführung der Erfindung

### Die thermoplastischen Kunststoffformmassen und ihre Herstellung

Polymethyl(meth)acrylate werden im Allgemeinen durch radikalische Polymerisation von Mischungen erhalten, die Methylmethacrylat enthalten. Im Allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Daneben können diese Mischungen zur Herstellung von Polymethyl(meth)acrylaten weitere (Meth)acrylate enthalten, die mit Methylmethacrylat copolymerisierbar sind. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert. - Butyl(meth)acrylat, Pentyl(meth)acrylat und 2 - Ethylhexyl(meth)acrylat; (Meth)acrylate, die sich von ungesättigten Alkoholen ableiten, wie z. B. Oleyl(meth)acrylat, 2 - Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3 - Hydroxypropyl(meth)acrylat, 3,4 - Dihydroxybutyl(meth)acrylat, 2 - Hydroxyethyl(meth)acrylat, 2 - Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat; Styrol, substituierte Styrole mit einem Alkylsubstituenten in der Seitenkette, wie z. B. α-Methylstyrol und α -Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;

Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.

Im Allgemeinen werden diese Comonomere in einer Menge von 0 Gew.-% bis 60 Gew.-%, vorzugsweise 0 Gew.-% bis 40 Gew.-% und besonders bevorzugt 0 Gew.-% bis 20 Gew.-%, bezogen auf das Gewicht der Monomeren, eingesetzt, wobei die Verbindungen einzeln oder als Mischung verwendet werden können.

Die Polymerisation wird im Allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,01 Gew.-% bis 10 Gew.-%, vorzugsweise von 0,5 Gew.-% bis 3 Gew.-%, bezogen auf das Gewicht der Monomeren, eingesetzt.

Hierbei können verschiedene Poly(meth)acrylate eingesetzt werden, die sich beispielsweise im Molekulargewicht oder in der Monomerzusammensetzung unterscheiden.

### Schlagzähmodifizierter Poly(meth)acrylat-Kunststoff

Der schlagzähmodifizierte Poly(meth)acrylat-Kunststoff besteht aus 20 bis 80, bevorzugt 30 bis 70 Gew.-% einer Poly(meth)acrylat-Matrix und 80 bis 20,
bevorzugt 70 bis 30 Gew.-% Elastomerteilchen mit einem mittleren Teilchendurchmesser von 10 bis 150 nm (Messungen z. B. mit der Ultrazentrifugenmethode).

Bevorzugt weisen die in der Poly(meth)acrylat-Matrix verteilten Elastomerteilchen einen Kern mit einer weichen Elastomerphase und einer daran gebundenen Hartphase auf.

Der schlagzähmodifizierte Poly(meth)acrylat-Kunststoff (szPMMA) besteht aus einem Anteil Matrixpolymer, polymerisiert aus mindestens 80 Gew.-% Einheiten Methylmethacrylat sowie gegebenenfalls 0 bis 20 Gew.-% Einheiten von mit Methylmethacrylat copolymerisierbaren Monomeren und einem in der Matrix verteilten Anteil an Schlagzähmodifizierungsmitteln auf Basis von vernetzten Poly(meth)acrylaten

Das Matrixpolymer besteht insbesondere aus 80 Gew.-% bis 100 Gew.-%, vorzugsweise zu 90 Gew.-% - 99,5 Gew.-%, aus radikalisch polymerisierten Methylmethacrylat-Einheiten und gegebenenfalls zu 0 Gew.-% - 20 Gew.-%, bevorzugt zu 0,5 Gew.-% - 10 Gew.-% aus weiteren radikalisch polymerisierbaren Comonomeren, z. B. C₁- bis C₄-Alkyl(meth)acrylaten, insbesondere Methylacrylat, Ethylacrylat oder Butylacrylat. Vorzugsweise liegt das mittlere Molekulargewicht M_{w} (Gewichtsmittel) der Matrix im Bereich von 90.000 g/mol bis 200.000 g/mol, insbesondere 100.000 g/mol bis 150.000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Bevorzugt ist ein Copolymer aus 90 Gew.-% bis 99,5 Gew.-% Methylmethacrylat und 0,5 Gew.-% bis 10 Gew.-% Methylacrylat. Die Vicaterweichungstemperaturen VET (ISO 306-B50) können im Bereich von mindestens 90, bevorzugt von 95 bis 112 °C liegen.

### Das Schlagzähmodifizierungsmittel

Die Polymethacrylat-Matrix enthält ein Schlagzähmodifizierungsmittel, welches z. B. ein zwei- oder dreischalig aufgebautes Schlagzähmodifizierungsmittel sein kann.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 und EP-A 0 683 028 beschrieben.

### Schlagzähmodifizierungsmittel

In der Polymethacrylat-Matrix sind 1 Gew.-% bis 30 Gew.-%, bevorzugt 2 Gew.-% bis 20 Gew.-%, besonders bevorzugt 3 Gew.-% bis 15 Gew.-%, insbesondere 5 Gew.-% bis 12 Gew.-% eines Schlagzähmodifizierungsmittels, das eine Elastomerphase aus vernetzten Polymerisatteilchen ist, enthalten. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 10 bis 150 nm, bevorzugt 20 bis 100, insbesondere 30 bis 90 nm. Diese bestehen in der Regel aus mindestens 40 Gew.-%, bevorzugt 50 Gew.-% - 70 Gew.-% Methylmethacrylat, 20 Gew.-% bis 40 Gew.-%, bevorzugt 25 Gew.-% bis 35 Gew.-% Butylacrylat sowie 0,1 Gew.-% bis 2 Gew.-%, bevorzugt 0,5 Gew.-% bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 Gew.-% bis 10 Gew.-%, bevorzugt 0,5 Gew.-% bis 5 Gew.-% an C₁-C₄-Alkylmethacrylaten, wie Ethylacrylat oder Butylmethacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei- oder einen dreischichtigen Kern-Schale-Aufbau aufweisen können und durch Emulsionspolymerisation erhalten werden (s. z. B. EP-A 0 113 924, EP-A 0 522 351, EP-A 0 465 049 und EP-A 0 683 028). Geeignete Teilchengrößen dieser Emulsionspolymerisate müssen jedoch für die Zwecke der Erfindung im Bereich von 10 - 150, bevorzugt 20 bis 120 nm, besonders bevorzugt 50 - 100 nm.

Ein dreischichtiger bzw. dreiphasiger Aufbau mit einem Kern und zwei Schalen kann wie folgt beschaffen sein. Eine innerste (harte) Schale kann z. B im Wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 Gew.-% bis 40 Gew.-% , besonders bevorzugt im Bereich von 25 Gew.-% bis 35 Gew.-%.

### Schlagzähmodifizierte Polymethacrylat-Formmassen

Im Extruder können das Schlagzähmodifizierungsmittel und Matrix-Polymerisat zu schlagzähmodifizierten Polymethacrylat-Formmassen in der Schmelze vermischt werden. Das ausgetragene Material wird in der Regel zunächst zu Granulat geschnitten. Dieses kann mittels Extrusion oder Spritzguß zu Formkörpern, wie Platten oder Spritzgußteilen weiterverarbeitet werden.

### Zweiphasiger Schlagzähmodifier gemäß EP 0 528 196 A1

Bevorzugt, insbesondere zur Folienherstellung, jedoch nicht auf diese beschränkt, wird ein, im Prinzip aus EP 0 528 196 A1 bekanntes System verwendet, das ein zweiphasiges, schlagzähmodifiziertes Polymerisat ist aus:
a1) 10 Gew.-% bis 95 Gew.-% einer zusammenhängenden Hartphase mit einer Glasübergangstemperatur T_{mg} über 70 °C, aufgebaut aus
   a11) 80 Gew.-% bis 100 Gew.-% (bezogen auf a1) Methylmethacrylat und
   a12) 0 Gew.-% bis 20 Gew.-% eines oder mehrerer weiterer ethylenisch ungesättigter, radikalisch polymerisierbarer Monomeren, und
a2) 90 Gew.-% bis 5 Gew.-% einer in der Hartphase vorteilten Zähphase mit einer Glasübergangstemperatur T_{mg} unter -10 °C, aufgebaut aus
   a21) 50 Gew.-% bis 99,5 Gew.-% eines C₁-C₁₀-Alkylacrylats (bezogen auf a2)
   a22) 0,5 Gew.-% bis 5 Gew.-% eines vernetzenden Monomeren mit zwei oder mehr ethylenisch ungesättigten, radikalisch polymerisierbaren Resten, und
   a23) gegebenenfalls weiteren ethylenisch ungesättigten, radikalisch polymerisierbaren Monomeren,
wobei wenigstens 15 Gew.-% der Hartphase a1) mit der Zähphase a2) kovalent verknüpft sind.

Das zweiphasige Schlagzähmodifizierungsmittel kann durch eine zweistufige Emulsionspolymerisation in Wasser erzeugt werden, wie z. B. in DE-A 38 42 796 beschrieben. In der ersten Stufe wird die Zähphase a2) erzeugt, die zu mindestens 50, vorzugsweise zu mehr als 80 Gew.-%, aus niederen Alkylacrylaten aufgebaut ist, woraus sich eine Glasübergangstemperatur T_{mg} dieser Phase von unter -10 °C ergibt. Als vernetzende Monomere a22) werden (Meth)acrylester von Diolen, wie beispielsweise Ethylenglykoldimethacrylat oder 1,4-Butandioldimethacrylat, aromatische Verbindungen mit zwei Vinyl- oder Allylgruppen, wie beispielsweise Divinylbenzol, oder andere Vernetzer mit zwei ethylenisch ungesättigten, radikalisch polymerisierbaren Resten, wie z. B. Allylmethacrylat als Pfropfvernetzer, eingesetzt. Als Vernetzer mit drei oder mehr ungesättigten, radikalisch polymerisierbaren Gruppen, wie Allylgruppen oder (Meth)acrylgruppen, seien beispielhaft Triallylcyanurat, Trimethylolpropan-triacrylat und -trimethacrylat sowie Pentaerythrit-tetraacrylat und - tetramethacrylat genannt. Weitere Beispiele sind hierzu in US 4,513,118 angegeben.

Die unter a23) genannten ethylenisch ungesättigten, radikalisch polymerisierbaren Monomeren können beispielsweise Acryl- bzw. Methacrylsäure sowie deren Alkylester mit 1 - 20 Kohlenstoffatomen, sofern noch nicht genannt, sein, wobei der Alkylrest linear, verzweigt oder cyclisch sein kann. Desweiteren kann a23) weitere radikalisch polymerisierbare aliphatische Comonomere, die mit den Alkylacrylaten a21) copolymerisierbar sind, umfassen. Jedoch sollen nennenswerte Anteile an aromatischen Comonomeren, wie Styrol, alpha-Methylstyrol oder Vinyltoluol ausgeschlossen bleiben, da sie - vor allem bei Bewitterung - zu unerwünschten Eigenschaften der Formmasse A führen.

Bei der Erzeugung der Zähphase in der ersten Stufe muß die Einstellung der Teilchengröße und deren Uneinheitlichkeit genau beachtet werden. Dabei hängt die Teilchengröße der Zähphase im wesentlichen von der Konzentration des Emulgators ab. Vorteilhafterweise kann die Teilchengröße durch den Einsatz eines Saatlatex gesteuert werden. Teilchen mit einer mittleren Teilchengröße (Gewichtsmittel) unter 130 nm, vorzugsweise unter 70 nm, und mit einer Uneinheitlichkeit U₈₀ der Teilchengröße unter 0,5, (U₈₀ wird aus einer integralen Betrachtung der Teilchengrößenverteilung, die per Ultrazentrifuge bestimmt wird, ermittelt. Es gilt: U₈₀ = [(r₉₀ - r₁₀) / r₅₀] - 1, wobei r₁₀, r₅₀, r₉₀ = mittlerer integraler Teilchenradius für den gilt 10,50,90 % der Teilchenradien liegen unter und 90,50,10 % der Teilchenradien liegen über diesem Wert) vorzugsweise unter 0,2, werden mit Emulgatorkonzentrationen von 0,15 bis 1,0 Gew.-%, bezogen auf die Wasserphase, erreicht. Dies gilt vor allem für anionische Emulgatoren, wie beispielsweise die besonders bevorzugten alkoxylierten und sulfatierten Paraffine. Als Polymerisationsinitiatoren werden z. B. 0,01 Gew.-% bis 0,5 Gew.-% Alkali- oder Ammoniumperoxodisulfat, bezogen auf die Wasserphase eingesetzt und die Polymerisation wird bei Temperaturen von 20 bis 100 °C ausgelöst. Bevorzugt werden Redox-Systeme, beispielsweise eine Kombination aus 0,01 Gew.-% bis 0,05 Gew.-% organischem Hydroperoxid und 0,05 Gew.-% bis 0,15 Gew.-% Natriumhydroxymethylsulfinat , bei Temperaturen von 20 bis 80 °C verwendet.

Die mit der Zähphase a2) zumindest zu 15 Gew.-% kovalent verbundene Hartphase a1) weist eine Glasübergangstemperatur von wenigstens 70 °C auf und kann ausschließlich aus Methylmethacrylat aufgebaut sein. Als Comonomere a12) können bis zu 20 Gew.-% eines oder mehrerer weiterer ethylenisch ungesättigter, radikalisch polymerisierbarer Monomerer in der Hartphase enthalten sein, wobei Alkyl(meth)acrylate, vorzugsweise Alkylacrylate mit 1 bis 4 Kohlenstoffatomen, in solchen Mengen eingesetzt werden, daß die oben genannte Glasübergangstemperatur nicht unterschritten wird.

Die Polymerisation der Hartphase a1) verläuft in einer zweiten Stufe ebenfalls in Emulsion unter Verwendung der üblichen Hilfsmittel, wie sie beispielsweise auch zur Polymerisation der Zähphase a2) verwandt werden.

In einer bevorzugten Ausführungsform enthält die Hartphase niedermolekulare und/oder einpolymerisierte UV-Absorber in Mengen von 0,1 Gew.-% bis 10 Gew.-%, bevorzugt 0,5 Gew.-% - 5 Gew.-%, bezogen auf A als Bestandteil der comonomeren Komponenten a12) in der Hartphase. Beispielhaft für die polymerisierbaren UV-Absorber, wie sie u.a. in der US 4 576 870 beschrieben sind, seien 2-(2'-Hydroxyphenyl)-5-methacrylamidobenzotriazol oder 2-Hydroxy-4-methacryloxybenzophenon genannt. Niedermolekulare UV-Absorber können beispielsweise Derivate des 2-Hydroxybenzophenons oder des 2-Hydroxyphenylbenzotriazols oder Salicylsäurephenylester sein. Im allgemeinen weisen die niedermolekularen UV-Absorber ein Molekulargewicht von weniger als 2 x 10³ (g/mol) auf. Besonders bevorzugt sind UV-Absorber mit geringer Flüchtigkeit bei der Verarbeitungstemperatur und homogener Mischbarkeit mit der Hartphase a1) des Polymerisats A.

Blends mit Poly(meth)acrylaten als Hauptkomponente

Ferner können Mischungen von PMMA mit weiteren, mit PMMA verträglichen Kunststoffen verwendet werden. Als mit PMMA verträgliche Kunststoffen kommen beispielsweise ABS-Kunststoffe oder SAN - Kunststoffe in Betracht.

Die PMMA-Kunststoffformmassen werden unter der Marke PLEXIGLAS^{®} von der Evonik Röhm GmbH in den Handel gebracht.

Die PMMA-Kunststoffformmassen und die weiteren Kunststoffformmassen werden üblicherweise mittels eines Farbmasterbatches oder mit Flüssigfarbe eingefärbt.

### Die Polycarbonate

Polycarbonate sind in der Fachwelt bekannt. Polycarbonate können formal als Polyester aus Kohlensäure und aliphatischen oder aromatischen Dihydroxy-Verbindungen betrachtet werden. Sie sind leicht zugänglich durch Umsetzung von Diglykolen oder Bisphenolen mit Phosgen bzw. Kohlensäurediestern durch Polykondensations- bzw. Umesterungsreaktionen.

Hierbei sind Polycarbonate bevorzugt, die sich von Bisphenolen ableiten. Zu diesen Bisphenolen gehören insbesondere 2,2-Bis-(4-hydroxyphenyl)-propan (Bisphenol A), 2,2-Bis-(4-hydroxyphenyl)-butan (Bisphenol B), 1,1-Bis(4-hydroxyphenyl)cyclohexan (Bisphenol C), 2,2'-Methylendiphenol (Bisphenol F), 2,2-Bis(3,5-dibrom-4-hydroxyphenyl)propan (Tetrabrombisphenol A) und 2,2-Bis(3,5-dimethyl-4-hydroxyphenyl)propan (Tetramethylbisphenol A).

Üblich werden derartige aromatische Polycarbonate durch Grenzflächenpolykondensation oder Umesterung hergestellt, wobei Einzelheiten in Encycl. Polym. Sci. Engng. 11, 648-718 dargestellt sind.

Bei der Grenzflächenpolykondensation werden die Bisphenole als wäßrige, alkalische Lösung in inerten organischen Lösungsmitteln, wie beispielsweise Methylenchlorid, Chlorbenzol oder Tetrahydrofuran, emulgiert und in einer Stufenreaktion mit Phosgen umgesetzt. Als Katalysatoren gelangen Amine, bei sterisch gehinderten Bisphenolen auch Phasentransferkatalysatoren zum Einsatz. Die resultierenden Polymere sind in den verwendeten organischen Lösungsmitteln löslich.

Über die Wahl der Bisphenole können die Eigenschaften der Polymere breit variiert werden. Bei gleichzeitigem Einsatz unterschiedlicher Bisphenole lassen sich in Mehrstufen-Polykondensationen auch Block-Polymere aufbauen.

### Die Farbmittel

Folgende Farbmittelgruppen können nach der erfindungsgemäßen Lehre verwendet werden:
1. Organische Farbpigmente, wie beispielsweise Diazofarbstoffe, Phthalocyanine, Perylene, Anthrachinone,
2. Organische lösliche Farbstoffe, wie beispielsweise Anthrapyrimidine, Chinophthalon, Perinone oder Monoazofarbstoffe wie beispielsweise Thermoplastrot^{®} 454, Macrolexgelb^{®} G, Sandoplast^{®} Rot G oder Solvaperm^{®} Rot G,
3. Mischung aus 1. und 2,
4. Anorganische Pigmente (beispielsweise Zinkchromat, Cadmiumsulfid, Chromoxyd, Ultramarin-Pigmente und Metallflitter, ferner BaSO₄ und TiO₂)
5. Mischung aus 1., 2. und 4 und
6. Ruß

Die Menge an Farbmittel kann zwischen 0,5 Gew.-% und 50 Gew.-%, bezogen auf die Gesamtmengen der Farbmittelpräparation, betragen.

### Das Polyacrylat

Als Polyacrylat wird beispielsweise ein Polyacrylat verwendet, da unter der Marke EFKA^{®} - 4550 von Ciba Specialty Chemicals in den Handel gebracht wird. Das Polymer besteht im Wesentlichen aus den Monomeren alpha-Methylstyrol, 2-Ethylhexylacrylat und MPEG-Methacrylat.

Das modifizierte Polyacrylat wird in Form einer wässrigen Lösung mit einem Wirksubstanzgehalt zwischen 48 Gew.-% und 52 Gew.-% eingesetzt.

Die Menge an Polyacrylat kann zwischen 5 Gew.-% und 50 Gew.-%, bezogen auf die Gesamtmenge der Farbmittelpräparation betragen.

Das Polyacrylat wird als pH-Wert-unabhängiges Dispergiermittel zur Pigmentdeflokulation in wässrigen Lacksystemen und Pigmentkonzentraten eingesetzt.

### Weitere Hilfsstoffe

Ferner können der Farbmittelpräparation optional alle üblichen Hilfsstoffe zugesetzt werden, wie beispielsweise Mittel zur Verhinderung der Fäulnis, der bakteriellen Zersetzung, Fungizide, Verlaufshilfsmittel und Entschäumer.

Zur Einstellung der optimalen Viskosität der Farbmittelzusammensetzung wird beispielsweise VE-Wasser verwendet.

Die Einfärbung der thermoplastischen Kunststoffformmasse kann entweder direkt durch Zugabe der Farbmittelpräparation zu einer ungefärbten Kunststoffformmasse erfolgen oder über einen Masterbatch.

Unter einem Masterbatch versteht man eine Formulierung aus der Farbmittelpräparation und einer Kunststoffformmasse, wobei die Konzentration der Farbmittelpräparation im Masterbatch so eingestellt wird, daß beim Einsatz des Masterbatches zum Einfärben von ungefärbten Kunststoffformmassen der gewünschte Farbeindruck entsteht.

### Beispiele

### Herstellung der eingefärbten thermoplastischen Kunststoffformmasse

### Einfärbung mit Farbmittelpräparation

### Beispiele 1 bis 4 wurden auf folgende Weise hergestellt:

Aus Kunststoffgranulat und Farbmittelpräparation wurde im Taumelmischer eine Mischung hergestellt, die mittels eines Trichters in der Einzugszone eines Einschneckenextruders eindosiert wurde. Die Entgasungszonen waren an einer Vakuumpumpe angeschlossen. Dem Extruder war ein Granulator nachgeschaltet. Aus dem so gewonnenen Granulat wurde in einem zweiten Verarbeitungsschritt Probekörper für die Vicat - Erweichungstemperaturbestimmung spritzgegossen.

### Vergleichsbeispiel 1 für eine Einfärbung mit organischem Bindemittel (Fettsäureester)

### Zusammensetzung:

- Farbmittel:
   ○ 0,06.Gew.-% Thermoplastrot^{®} 454
   ○ 0,016 Gew.-% Macrolexgelb^{®} G
- 0,3 Gew.-% Octadecensäure, zu ca. 70mol% als Oligoethylenglykolmono- und Diester vorliegend, restl. 30% mit Zucker/Zuckeralkoholen verestert
- 99,62 Gew.-% PLEXIGLAS^{®} Formmasse 8N
Vicat - Erweichungstemperatur: 106°C

### Zum Vergleich:

Vicat - Erweichungstemperatur der PLEXIGLAS^{®} Formmasse 8N mit 0,06 Gew.-% Thermoplastrot^{®} 454 und 0,016 Gew.-% Macrolexgelb^{®} G ohne C18-Fettsäure: 107°C

### Spritzguß auf einer Battenfeld BA 350CD:

Einspritzzeit: 1,76 sec
Massetemp.: 250 °C
Zylindertemp.: 250 bis 230°C
Werkzeugtemp.: 68 °C
Umschalten von Einspritzen auf Nachdruck bei 560 bar Forminnendruck
Gesamtzykluszeit: 50 sec
Spritzguss mit offenem Entgasungszylinder

### Nach 30 Schuß starker Formbelag und rote Farbablagerung

### Beispiel 2: Zugabe von reinem Bindemittel auf Wasserbasis ohne Farbpigmente:

### Zusammensetzung:

- 0,32 Gew.-% dest. Wasser
- 0,17 Gew.-% EFKA^{®} 4550 (50% wässriges mod. Polyacrylat)
- 0,01 Gew.-% Entschäumer
- 0,0006 Gew.-% Antifäulnismittel
- 99,5 Gew.-% PLEXIGLAS^{®} Formmasse 8N

Spritzguß auf Arburg 221: keine Belagsbildung
Einspritzzeit: 1,5 sec
Massetemp.: 250 °C
Zylindertemp.: 250 bis 225°C
Werkzeugtemp.: 68 °C
Wegeabhängige Umschaltung von Einspritzen auf Nachdruck Gesamtzykluszeit: 30 sec
Spritzguss mit offenem Entgasungszylinder

Bei diesem Versuch wurde keine Vicat - Erweichungstemperaturerhöhung beobachtet, der Vicat - Erweichungstemperatur betrug sowohl mit als auch ohne Bindemittel 107°C

### Beispiel 3: Einfärben mit Thermoplastrot 454 in Form einer Flüssigfarbe auf Wasserbasis:

### Zusammensetzung:

- 0,193 Gew.-% dest. Wasser
- 0,1 Gew.-% EFKA^{®} 4550 (50% wässriges mod. Polyacrylat)
- 0,006 Gew.-% Entschäumer
- 0,00035 Gew.-% Antifäulnismittel
- 0,2 Gew.-% Thermoplastrot^{®} 454
- 99,5 Gew.-% PLEXIGLAS^{®} Formmasse 8N

Spritzguß auf Battenfeld BA 350CD: keine Belagsbildung
Einspritzzeit: 1,77 sec
Massetemp.: 248 °C
Zylindertemp.: 250 bis 230°C
Werkzeugtemp.: 68 °C
Umschalten von Einspritzen auf Nachdruck bei 565 bar Forminnendruck
Gesamtzykluszeit: 50 sec
Spritzguss mit offenem Entgasungszylinder

Im Vergleich zu nicht eingefärbter PLEXIGLAS^{®} Formmasse 8N erhöht sich die Vicat-Erweichungstemperatur um 2,5°C von 106 °C auf 108,5°C

### Beispiel 4: Einfärben mit Paliotogelb^{®} K2270 in Form einer Flüssigfarbe auf Wasserbasis:

### Zusammensetzung:

- 0,193 Gew.-% dest. Wasser
- 0,1 Gew.-% EFKA^{®} 4550 (50% wässriges mod. Polyacrylat)
- 0,006 Gew.-% Entschäumer
- 0,00035 Gew.-% Antifäulnismittel
- 0,2 Gew.-% Paliotogelb^{®} K2270 (Pigment Yellow 183)
- 99,5 Gew.-% PLEXIGLAS^{®} Formmasse 8N

Spritzguß auf Battenfeld BA 350CD: keine Belagsbildung
Einspritzzeit: 1,76 sec
Massetemp.: 250 °C
Zylindertemp.: 250 bis 230°C
Werkzeugtemp.: 68 °C
Umschalten von Einspritzen auf Nachdruck bei 560 bar Forminnendruck
Gesamtzykluszeit: 50 sec
Spritzguss mit offenem Entgasungszylinder

Im Vergleich zu nicht eingefärbter PLEXIGLAS^{®} Formmasse 8N erhöht sich die Vicat-Erweichungstemperatur um 2,5°C von 106 °C auf 108,5°C

Die Flüssigfarben gemäß Beispiel 5 und Beispiel 6 wurden jeweils zu 0,5 Gew.-% auf PLEXIGLAS^{®} 8N aufgetrommelt (Taumelmischer) und auf einem 30er-Stork-Einschneckenextruder bei 230°C compoundiert. An der offenen Vakuumzone lag **kein** Vakuum an. Beim Spritzgießen der Compounds auf einer Arburg 221 zeigte sich kein Formbelag.
Einspritzzeit: 1,5 sec
Massetemp.: 250 °C
Zylindertemp.: 250 bis 225°C
Werkzeugtemp.: 68 °C
Wegeabhängige Umschaltung von Einspritzen auf Nachdruck Gesamtzykluszeit: 30 sec
Spritzguss mit offenem Entgasungszylinder

Die Vicat-Erweichungstemperatur der Formmasse blieb mit 108°C konstant.

### Beispiel 5:

| Bezeichnung | Mengen (in Gew.-%) |
|---|---|
| EFKA^{®} 4550 | 20 |
| VE-Wasser | 38,74 |
| Byk^{®} 024 | 1,2 |
| Sandoplast^{®} Rot G | 6,87 |
| Blanc Fix N | 31,54 |
| Kronos® 2220 (Titandioxid) | 1,580 |
| Ebotec® MT 15 | 0,07 |

### Beispiel 6:

| Bezeichnung | Mengen (in Gew.-%) |
|---|---|
| EFKA^{®} 4550 | 20 |
| VE-Wasser | 38,73 |
| Byk^{®} 024 | 0,6 |
| Kronos^{®} 2220 (Titandioxid) | 40,0 |
| Ebotec^{®} MT 15 | 0,07 |

Das Titandioxyd wurde auf einer Trommelmühle vor der Zugabe dispergiert.

Die Ergebnisse zeigen, daß sich die Vicat-Erweichungstemperatur nicht verringert sondern teilweise erhöht und daß sich beim Spritzguß der mit der erfindungsgemäßen Farbmittelpräparation eingefärbten thermoplastischen Kunststoffformmasse keine Beläge an den Spritzgußformen bilden.

Die Vicat- Erweichungstemperatur der Polymere wurde gemäß ISO 306 bestimmt.

## Patentansprüche

1. Wässrige Farbmittelpräparation zur Einfärbung von thermoplastischen Kunststoffformmassen,
**dadurch gekennzeichnet, daß** sie
• 1 Gew-% bis 49 Gew.-% eines modifizierten Polyacrylats, bestehend im Wesentlichen aus alpha-Methylstyrol, 2-Ethylhexylacrylat und MPEG-Methacrylat Einheiten, in Form einer 48 Gew.-% bis 52 Gew.-% wässrigen Lösung,
• 0,5 Gew-% bis 50 Gew.-% eines Farbmittels oder einer Farbmittelmischung und
• 0 Gew-% bis 50 Gew.-% der üblichen Hilfsstoffe und
• VE-Wasser enthält, wobei sich die Gewichtsteile der Komponenten zu 100 Gew.-% ergänzen.

2. Thermoplastische Kunststoffe,
**dadurch gekennzeichnet, daß** sie
mit einer Farbmittelpräparation nach Anspruch 1 eingefärbt sind.

3. Poly(meth)acrylat
**dadurch gekennzeichnet, daß** es mit einer Farbmittelpräparation nach Anspruch 1 eingefärbt ist.

4. Verfahren zur Einfärbung von thermoplastischen Kunststoffen,
**dadurch gekennzeichnet, daß** man
eine Farbmittelpräparation nach Anspruch 1 verwendet.

5. Verfahren nach Anspruch 4
**dadurch gekennzeichnet, daß** man
als thermoplastischen Kunststoff Poly(meth)acrylat verwendet.

6. Verfahren nach Anspruch 4
**dadurch gekennzeichnet, daß** man
als thermoplastischen Kunststoff ein schlagzähmodifiziertes Poly(meth)acrylat verwendet.

7. Thermoplastischer Kunststoff gemäß Anspruch 2
**dadurch gekennzeichnet, daß** es sich
um eine thermoplastische Kunststoffformmasse handelt.

8. Kunststoffformkörper, hergestellt durch Spritzguss oder Extrusion einer Kunststoffformmasse gemäß Anspruch 7.

## Claims

1. Aqueous colorant preparation for colouring thermoplastic polymer moulding materials,
**characterized in that** it comprises
• 1% by weight to 49% by weight of a modified polyacrylate, consisting essentially of alphamethylstyrene, 2-ethylhexyl acrylate and MPEG methacrylate units, in the form of a 48% by weight to 52% by weight aqueous solution,
• 0.5% by weight to 50% by weight of a colorant or of a colorant mixture and
• 0% by weight to 50% by weight of the customary assistants and
• demineralized water, where the portions by weight of the components add up to 100% by weight.

2. Thermoplastic polymers,
**characterized in that**
they have been coloured with a colorant preparation according to Claim 1.

3. Poly (meth) acrylate,
**characterized in that** it has been coloured with a colorant preparation according to Claim 1.

4. Process for colouring thermoplastic polymers,
**characterized in that**
a colorant preparation according to Claim 1 is used.

5. Process according to Claim 4,
**characterized in that**
the thermoplastic polymer used is poly(meth)acrylate.

6. Process according to Claim 4,
**characterized in that**
the thermoplastic polymer used is an impact-modified poly(meth)acrylate.

7. Thermoplastic polymer according to Claim 2,
**characterized in that**
it is a thermoplastic polymer moulding material.

8. Polymer moulding produced by injection moulding or extrusion of a polymer moulding material according to Claim 7.

## Revendications

1. Préparation aqueuse d'agent colorant destinée à la coloration de matières à mouler synthétiques thermoplastiques,
**caractérisée en ce qu'**elle contient
• 1 % en poids à 49 % en poids d'un polyacrylate modifié, essentiellement constitué de motifs alpha-méthylstyrène, acrylate de 2-éthylhexyle et méthacrylate de MPEG, sous forme d'une solution aqueuse à 48 % en poids à 52 % en poids,
• 0,5 % en poids à 50 % en poids d'un agent colorant ou d'un mélange d'agents colorants et
• 0 % en poids à 50 % en poids des adjuvants usuels et
• de l'eau totalement déminéralisée, la somme des parties en poids des composants étant égale à 100 % en poids.

2. Matières synthétiques thermoplastiques,
**caractérisées en ce**
**qu'**elles sont colorées avec une préparation d'agent colorant selon la revendication 1.

3. Poly(méth)acrylate,
**caractérisé en ce qu'**il est coloré avec une préparation d'agent colorant selon la revendication 1.

4. Procédé pour la coloration de matières synthétiques thermoplastiques,
**caractérisé en ce**
**qu'**on utilise une préparation d'agent colorant selon la revendication 1.

5. Procédé selon la revendication 4,
**caractérisé en ce**
**qu'**on utilise comme matière synthétique thermoplastique du poly(méth)acrylate.

6. Procédé selon la revendication 4,
**caractérisé en ce**
**qu'**on utilise comme matière synthétique thermoplastique un poly(méth)acrylate modifié antichoc.

7. Matière synthétique thermoplastique selon la revendication 2,
**caractérisée en ce**
**qu'**il s'agit d'une matière à mouler synthétique thermoplastique.

8. Corps moulés en matière plastique, produit par moulage par injection ou extrusion d'une matière à mouler synthétique selon la revendication 7.
